# EUROPÄISCHE PATENTSCHRIFT

(11) **EP 3 173 794 B1**
(45) Veröffentlichungstag und Bekanntmachung des Hinweises auf die Patenterteilung: **21.07.2021**
(21) Anmeldenummer: 15196224.8
(22) Anmeldetag: 25.11.2015
(51) Int. Cl.: G01N 35/10, G01N 35/00

(54) **VERFAHREN ZUM TRANSFER EINES FLÜSSIGKEITSVOLUMENS IN EINEM ANALYSEGERÄT**
METHOD FOR TRANSFERRING A FLUID VOLUME IN AN ANALYZER
PROCEDE DE TRANSFERT D'UN VOLUME DE LIQUIDE DANS UN APPAREIL D'ANALYSE

(43) Veröffentlichungstag der Anmeldung: 31.05.2017
(73) Patentinhaber: Siemens Healthcare Diagnostics Products GmbH, 35041 Marburg (DE)
(72) Erfinder: Michels, Thorsten, 64521 Gross-Gerau (DE)

(56) Entgegenhaltungen:
- EP-A2- 0 670 483
- WO-A1-2015/079829
- FR-A1- 2 855 612
- JP-A- 2003 302 411
- US-A- 3 855 867

## Beschreibung

Die vorliegende Erfindung liegt auf dem Gebiet der automatischen Analysegeräte und betrifft ein Verfahren zum Transfer eines Flüssigkeitsvolumens in einem Analysegerät.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsgefäßen und Reagenzflüssigkeitsbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten, erfolgt vielfach, indem ein Aliquot einer Körperflüssigkeit eines Patienten gleichzeitig oder nacheinander mit einem oder mehreren Testreagenzien in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weiterleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Der Transfer von Probenflüssigkeiten oder von Reagenzflüssigkeiten erfolgt üblicherweise mit automatischen Pipettiervorrichtungen. Solche Pipettiervorrichtungen umfassen in der Regel eine senkrecht an einem verfahrbaren Transferarm angeordnete und höhenverstellbare Pipettiernadel, die mit einer Pumpeinheit verbunden ist, so dass mit der Pipettiernadel ein gewünschtes Volumen einer Flüssigkeit aus einem Behälter entnommen und an einem anderen Ort in einen Zielbehälter abgegeben werden kann. Üblicherweise wird die Pipettiernadel mit Hilfe des Transferarms an eine Position über einem Flüssigkeitsbehälter verfahren und dann in den Flüssigkeitsbehälter und die darin enthaltene Flüssigkeit abgesenkt. Nach Entnahme des gewünschten Volumens wird die Pipettiernadel nach oben gefahren und dann mit Hilfe des horizontal verfahrbaren Transferarms an die gewünschte Zielposition über einem Flüssigkeitsbehälter gefahren, beispielsweise über ein Reaktionsgefäß oder eine Messzelle. Dort wird die Pipettiernadel wieder abgesenkt, und die Flüssigkeitsmenge wird abgegeben (EP0670483 A2).

Es ist bekannt, dass Pipettierungenauigkeiten dadurch entstehen können, dass Teile eines von einer Pipettiernadel abgegebenen Flüssigkeitsvolumens aufgrund von Adhäsionskräften an der Pipettiernadelspitze haften bleiben. Dies kann insbesondere bei der Pipettierung von Volumina im Mikroliterbereich schwerwiegende Folgen haben, wenn dadurch eine falsche Zusammensetzung eines Reaktionsansatzes entsteht und fehlerhafte Messergebnisse generiert werden.

Zur Vermeidung solcher Pipettierungenauigkeiten wird üblicherweise versucht, das Flüssigkeitsvolumen an die Gefäßinnenwand zu pipettieren, damit eine Adhäsion der Flüssigkeit an der Pipettiernadelspitze vermieden wird.

Im Stand der Technik werden dazu beispielsweise Pipettiernadeln mit leicht gebogener Spitze verwendet. Dies hat jedoch den Nachteil einer eingeschränkten Zweckmäßigkeit, da derartige Pipettiernadeln zum Beispiel nicht auch zum Durchstechen von Röhrchendeckeln verwendet werden können.

In einem anderen Verfahren zur Vermeidung von Luftblasen bei der Zugabe einer Reagenzflüssigkeit zu einer Probenflüssigkeit wird der Pipettiervorgang so gesteuert, dass die Pipettiernadel in vertikaler Richtung und mittig in ein Reaktionsgefäß abgesenkt wird, dann in horizontaler Richtung verfahren wird, so dass die Spitze der Pipettiernadel senkrecht der Länge nach die senkrechte Innenwand des Reaktionsgefäßes berührt, und in dieser Position dann das Flüssigkeitsvolumen abgegeben wird (WO-A1-2015/079829).

Der vorliegenden Erfindung lag also die Aufgabe zugrunde, Mittel und Verfahren bereit zu stellen, mit denen eine hohe Präzision bei Pipettiervorgängen in einem automatischen Analysegerät erreicht werden kann.

Die Aufgabe wird im Wesentlichen dadurch gelöst, dass das Gefäß, in welches ein Flüssigkeitsvolumen mittels einer Pipettiernadel abgegeben werden soll, in einer Schrägstellung gehalten wird, so dass die Längsachse des Gefäßes relativ zur Längsachse der Pipettiernadel geneigt ist. Die Pipettiernadelspitze wird dann horizontal an die Innenwand des Gefäßes herangefahren, die Flüssigkeitsabgabe erfolgt während die Pipettiernadelspitze die Gefäßinnenwand berührt und nach der Flüssigkeitsabgabe wird die Pipettiernadelspitze wieder in horizontaler Richtung von der Gefäßinnenwand wegbewegt, bevor sie vertikal aus dem Gefäß herausgehoben wird.

Es wurde gefunden, dass durch die horizontale Bewegung der Pipettiernadelspitze an die geneigte Gefäßwand und wieder davon weg eine verbesserte Anhaftung der abgegebenen Flüssigkeit im Gefäß gewährleistet wird und dadurch die Präzision des Flüssigkeitstransfers erhöht wird.

Gegenstand der Erfindung ist damit ein Verfahren zum Transfer eines Flüssigkeitsvolumens in einem Analysegerät, gemäß Anspruch 1.

Das Verfahren zeichnet sich dadurch aus, dass das Reaktionsgefäß von dem Greifer zumindest während der Durchführung der Verfahrensschritte e) bis g), also im Zeitpunkt des Berührens der Innenwand des Reaktionsgefäßes durch die Pipettiernadelspitze, im Zeitpunkt der Flüssigkeitsabgabe und im Zeitpunkt des Lösens der Berührung zwischen Pipettiernadelspitze und Gefäßinnenwand, in einer Schrägstellung gehalten wird, so dass die Längsachse des Reaktionsgefäßes relativ zur Längsachse der Pipettiernadel geneigt ist.

Bevorzugterweise ist in der Schrägstellung die Längsachse des Reaktionsgefäßes um einen Winkel von 5° bis 20°, bevorzugt von 9° bis 15°, ganz besonders bevorzugt von 12° relativ zur Längsachse der Pipettiernadel geneigt. In diesem Neigungswinkelbereich ist sichergestellt, dass weder Flüssigkeit an der Außenseite der Pipettiernadelspitze anhaftet noch eine Tropfenbildung an der Gefäßwand stattfindet, sondern dass das abgegebene Flüssigkeitsvolumen vollständig entlang der Gefäßwand nach unten in Richtung des Bodens des Reaktionsgefäßes fließt.

Das Reaktionsgefäß kann von dem Greifer auch während weiterer Verfahrensschritte in der Schrägstellung gehalten werden. Alternativ wird das Reaktionsgefäß von dem Greifer zumindest während der Durchführung der Verfahrensschritte d) bis h) in der Schrägstellung gehalten, also auch bereits während des Absenkens der Pipettiernadel in vertikaler Richtung in das von dem Greifer gehaltene Reaktionsgefäß und dann noch während des Anhebens der Pipettiernadel in vertikaler Richtung aus dem von dem Greifer gehaltenen Reaktionsgefäß heraus.

Zumindest die Verfahrensschritte c) bis h) erfolgen zweckmäßigerweise in der genannten Reihenfolge. Allerdings können die Verfahrensschritte a) und b) bzw. a) und c) zeitlich unabhängig voneinander erfolgen, also gleichzeitig, nacheinander oder zeitlich überlappend.

Die verfahrbaren Transferarme zum räumlichen Transfer der verschiedenen funktionellen Einheiten, wie Pipettiervorrichtungen oder Greifer, können linear verfahrbar oder auch schwenkbar ausgestaltet sein.

Bei einer Pipettiernadel handelt es sich im Wesentlichen um eine zylinderförmige Hohlnadel mit einem zentralen Hohlkanal. Das distale Ende der Pipettiernadel, an dem üblicherweise auch die Austrittsöffnung des Hohlkanals vorgesehen ist, wird auch als Spitze der Pipettiernadel bezeichnet.

Unter einem "Greifer für ein Reaktionsgefäß" ist eine Vorrichtung zu verstehen, die ein Ergreifen, Halten und Wiederfreigeben eines Reaktionsgefäßes ermöglicht. Vorzugsweise erfolgt das Ergreifen, Halten und Wiederfreigeben eines Reaktionsgefäßes durch Formpaarung oder Kraftpaarung mit dem Greifer. Bevorzugt sind mechanische Greifer, die als Einfinger-, Zweifinger- oder Mehrfingergreifer starr, starr-gelenkig oder elastisch ausgebildet sein können. Geeignete Greifer sind zum Beispiel in EP-A2-2308588 oder EP-A1-0742435 beschrieben.

In einer bevorzugten Variante des Verfahrens ist der Greifer für ein Reaktionsgefäß einteilig und elastisch verformbar ausgeführt. Dies ermöglicht das Ergreifen über einen Schnappeffekt, wenn der Greifer mit ausreichender Kraft gegen ein Reaktionsgefäß bewegt wird. Erst bei Überwindung einer Lösekraft, die notwendig ist, um den Greifer wieder zu öffnen, wird das umschlossene Reaktionsgefäß wieder freigegeben.

In automatischen Analysegeräten typischerweise verwendete Reaktionsgefäße sind röhrchenförmig ausgestaltet und weisen eine Öffnung auf. Sie können unterschiedliche Querschnittsformen aufweisen; sie können beispielsweise eine runde, ovale, dreieckige, rechteckige oder quadratische Querschnittsform haben. Unter einem "Reaktionsgefäß" im Sinne der vorliegenden Erfindung sind explizit auch Messzellen und Küvetten zu verstehen, die definierte optische Eigenschaften aufweisen und sich daher für spektrophotometrische, fluorimetrische, luminometrische oder andere optische Analysemethoden eignen. Die Reaktionsgefäße können aus Kunststoff bestehen und zur einmaligen Verwendung vorgesehen sein. Alternativ können die Reaktionsgefäße auch aus Glas bestehen.

Die Aufnahme des Reaktionsgefäßes mit dem Greifer in Schritt a) erfolgt üblicherweise aus einer Senkrechtstellung des Reaktionsgefäßes in einer Aufnahmeposition. Automatische Analysegeräte verfügen häufig über bewegliche Inkubationseinrichtungen, die eine Vielzahl von Aufnahmepositionen für die Aufnahme jeweils eines einzelnen Reaktionsgefäßes aufweisen. Die Senkrechtstellung mit der Öffnung nach oben ist die typische Stellung der in Gebrauch befindlichen Reaktionsgefäße, da sie Flüssigkeitsvolumina aufnehmen sollen oder bereits enthalten.

In einer bevorzugten Ausführungsform des erfindungsgemäßen Verfahrens wird die Schrägstellung des Reaktionsgefäßes dadurch bewirkt, dass das Reaktionsgefäß mittels einer Verfahrbewegung des Greifers in horizontaler Richtung gegen eine geneigte Fläche gedrückt wird. Diese Ausführungsform ist besonders einfach durchzuführen, ohne dass aufwändige Maßnahmen zur Ausführung und Steuerung der Kippbewegung ergriffen werden müssten. Die geneigte Fläche kann beispielsweise durch ein einfaches flächiges, wandförmiges, gegen die Vertikale geneigtes Bauteil gebildet sein, das auf dem Verfahrweg des Greifers, z.B. auf der Bodenplatte des Analysegeräts, montiert ist. Alternativ kann ein Teil eines bereits in dem Analysegerät vorhandenen Bauteils, wie z.B. eine Außenwand einer Waschstation für Pipettiernadeln oder der Fuß eines Stativarms, einfach als geneigte Fläche ausgebildet werden. Die Neigung der Fläche ist jedenfalls so zu wählen, dass das Reaktionsgefäß in die gewünschte Schrägstellung geführt wird. Diese Ausführungsform ist bevorzugt kombinierbar mit einem elastisch verformbaren Greifer, in dem das Reaktionsgefäß aus der Senkrechtsstellung in eine Schrägstellung beweglich ist, wenn es mit ausreichender Kraft gegen eine geneigte Fläche gedrückt wird und in dem das Reaktionsgefäß aus der Schrägstellung zurück in die Senkrechtstellung beweglich ist, wenn es von der geneigten Fläche wieder wegbewegt wird.

In einer anderen Ausführungsform des erfindungsgemäßen Verfahrens wird die Schrägstellung des Reaktionsgefäßes durch eine Kippbewegung des Greifers bewirkt. Diese Ausführungsform ist bevorzugt kombinierbar mit einem Greifer, der ein steuerbares Gelenk umfasst.

Das Schrägstellen des Reaktionsgefäßes erfolgt vorzugsweise vor oder während des vertikalen Absenkens der Pipettiernadel in das von dem Greifer gehaltene Reaktionsgefäß.

Nach Beendigung der Flüssigkeitsabgabe und dem Zurückverfahren der Pipettiervorrichtung in eine Position, in der die Pipettiernadel keine Wandung des Reaktionsgefäßes mehr berührt, wird das Reaktionsgefäß wieder in die Senkrechtstellung gebracht. Dies kann entweder vor oder auch schon während des Anhebens des Pipettiernadel in vertikaler Richtung aus dem Reaktionsgefäß heraus erfolgen.

Ein weiterer Gegenstand der vorliegenden Erfindung ist ein automatisches Analysegerät gemäß Anspruch 8.

Das Schrägstellen des Reaktionsgefäßes erfolgt vorzugsweise vor oder während des vertikalen Absenkens der Pipettiernadel in das von dem Greifer gehaltene Reaktionsgefäß.

Ein erfindungsgemäßes Analysegerät umfasst vorzugsweise ein Element mit einer gegen die Vertikale geneigten Fläche, und eine Steuerung, die ferner so konfiguriert ist, dass die Schrägstellung des Reaktionsgefäßes dadurch bewirkt wird, dass das Reaktionsgefäß mittels einer Verfahrbewegung des Greifers in horizontaler Richtung gegen die geneigte Fläche des Elements gedrückt wird.

Das Element mit einer gegen die Vertikale geneigten Fläche kann beispielsweise durch ein einfaches flächiges, wandförmiges, Bauteil gebildet sein, das auf dem Verfahrweg des Greifers, z.B. auf der Bodenplatte des Analysegeräts, montiert ist. Alternativ kann ein Teil eines bereits in dem Analysegerät vorhandenen Bauteils, wie z.B. eine Außenwand einer Waschstation für Pipettiernadeln oder der Fuß eines Stativarms, einfach als geneigte Fläche ausgebildet werden. Die Neigung der Fläche ist jedenfalls so zu wählen, dass das Reaktionsgefäß in die gewünschte Schrägstellung geführt wird. Diese Ausführungsform ist bevorzugt kombinierbar mit der Verwendung eines elastisch verformbaren Greifers, in dem das Reaktionsgefäß in aus der Senkrechtsstellung in eine Schrägstellung beweglich ist, wenn es mit ausreichender Kraft gegen eine geneigte Fläche gedrückt wird und in dem das Reaktionsgefäß aus der Schrägstellung zurück in die Senkrechtstellung beweglich ist, wenn es von der geneigten Fläche wieder wegbewegt wird.

In einer anderen Ausführungsform des automatischen Analysegeräts umfasst der Greifer für das Reaktionsgefäß ein steuerbares Gelenk und die Steuerung ist ferner so konfiguriert, dass die Schrägstellung des Reaktionsgefäßes dadurch bewirkt wird, dass durch eine Bewegung des Gelenks eine Kippbewegung des Greifers bewirkt wird.

Die Erfindung wird im Folgenden anhand einer Zeichnung erläutert.

Darin zeigen
- FIG. 1: ein erfindungsgemäßes automatisches Analysegerät;
- FIG. 2: einen erfindungsgemäßen Pipettiervorgang.

Gleiche Teile sind in allen Figuren mit denselben Bezugszeichen versehen.

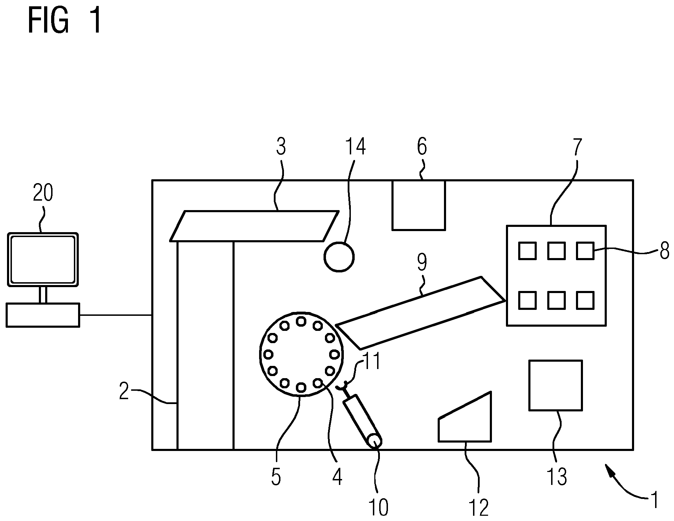

FIG. 1 ist eine schematische Darstellung eines automatischen Analysegeräts 1 mit einigen darin enthaltenen Bauteilen. Hierbei werden nur die wichtigsten Bauteile stark vereinfacht dargestellt, um die grundsätzliche Funktion des automatischen Analysegeräts 1 zu erläutern, ohne hierbei detailliert die einzelnen Teile jedes Bauteils darzustellen.

Das automatische Analysegerät 1 ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

Die Patientenproben werden dem automatischen Analysegerät 1 auf nicht näher dargestellten Schlitten über eine Zuführungsschiene 2 zugeführt. Informationen hinsichtlich der pro Probe durchzuführenden Analysen können beispielsweise mittels auf den Probengefäßen angebrachten Strichcodes übergeben werden, die in dem automatischen Analysegerät 1 ausgelesen werden. Aus den Probengefäßen werden mit Hilfe einer ersten Pipettiervorrichtung 3 Probenaliquots mittels einer Pipettiernadel entnommen.

Die Probenaliquots werden ebenfalls nicht näher dargestellten Küvetten zugeführt, die in Senkrechtstellung in Aufnahmepositionen 4 einer drehbaren, auf 37 °C temperierten Inkubationseinrichtung 5 angeordnet sind. Die Küvetten werden aus einem Küvettenvorratsbehälter 6 entnommen. In dem auf ca. 8-10 °C gekühlten Reagenzgefäßvorratsbehälter 7 werden Reagenzgefäße 8 mit verschiedenen Reagenzflüssigkeiten aufbewahrt. Um Reagenzflüssigkeit in eine Küvette zu transferieren, wird die Küvette mit Hilfe des an einem schwenkbaren Transferarm 10 befestigten, höhenverstellbaren Greifers 11 aus der Inkubationseinrichtung 5 entnommen und zu einem Bauteil 12 mit einer um ca. 12 ° gegen die Vertikale geneigten Fläche verfahren. Durch Drücken der Küvette gegen die geneigte Fläche des Bauteils 12 wird die Küvette in eine Schrägstellung geführt. Reagenzflüssigkeit wird mittels der Pipettiernadel einer zweiten Pipettiervorrichtung 9 aus einem Reagenzgefäß 8 entnommen und zur Bereitstellung eines Reaktionsansatzes in die Küvette, die bereits ein Probenaliquot enthält und die an dem Bauteil 12 angedrückt ist, abgegeben. Die Küvette mit dem Reaktionsansatz wird zurück zur Inkubationseinrichtung 5 transportiert und von dem Greifer 11 in einer Aufnahmeposition 4 abgesetzt. Nach der Inkubationszeit wird die Küvette mit dem Reaktionsansatz von einem zweiten, nicht dargestellten Transferarm mit einem Greifer von der Inkubationseinrichtung 5 in eine photometrische Messeinheit 13 transportiert, wo die Extinktion des Reaktionsansatzes gemessen wird.

Zum Reinigen der Pipettiernadeln der Pipettiervorrichtungen 3, 9 ist eine Waschstation 14 vorgesehen. Nach jedem Pipettiervorgang werden die Pipettiervorrichtungen 3, 9 jeweils zu der Waschstation 14 verfahren, die Pipettiernadel wird abgesenkt und gereinigt.

Der gesamte Prozess wird von einer Steuereinheit 20, wie z.B. von einem über eine Datenleitung angeschlossenen Rechner gesteuert, unterstützt durch eine Vielzahl weiterer, nicht näher dargestellter elektronischer Schaltungen und Mikroprozessoren innerhalb des automatischen Analysegeräts 1 und seiner Bauteile.

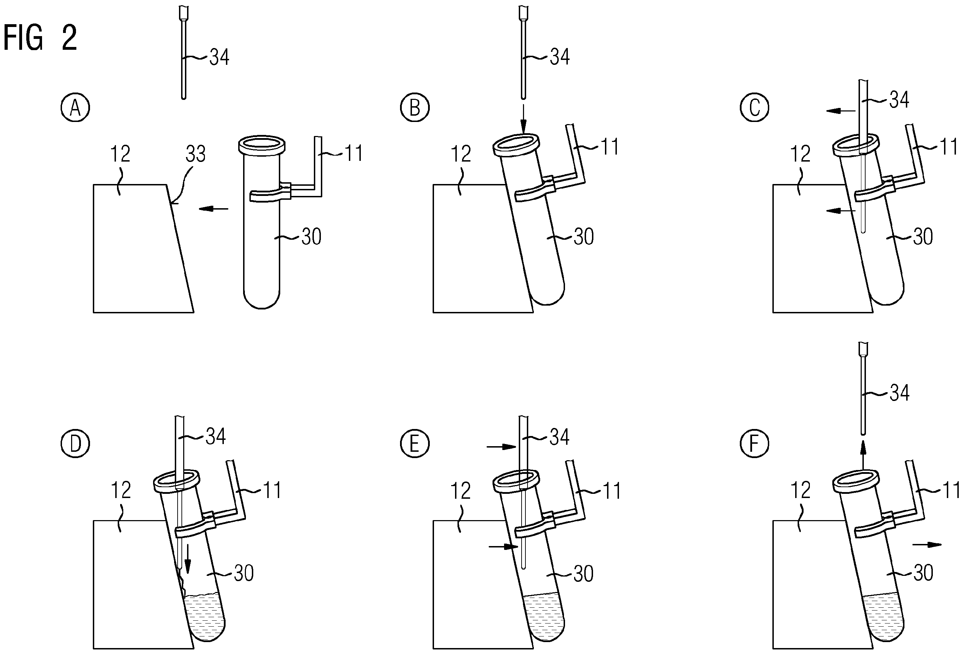

FIG. 2 ist eine schematische Darstellung einiger Schritte des erfindungsgemäßen Verfahrens zum Transfer eines Flüssigkeitsvolumens in einem nicht näher dargestellten automatischen Analysegerät. In Ausschnitt A ist eine von einem Greifer 11 gehaltene Küvette 30 gezeigt, die durch eine Bewegung des nicht näher dargestellten Transferarmes, an dem der Greifer 11 befestigt ist, in Richtung des Pfeils, also horizontal auf ein Bauteil 12 mit einer um 12° gegen die Vertikale geneigten Fläche 33 hinzu bewegt wird. Eine Pipettiernadel 34, mit der bereits aus einem Reagenzgefäß ein Volumen einer Reagenzflüssigkeit entnommen wurde, befindet sich bereits in einer Position oberhalb der Öffnung der Küvette 30. Die Küvette 30 wird solange in Richtung des Bauteils 12 mit der geneigten Fläche 33 hin bewegt, bis sie gegen die geneigte Fläche 33 gedrückt wird. Dies ist in Ausschnitt B gezeigt. Erst wenn die Küvette 30 in Schrägstellung gebracht ist, wird die Pipettiernadel 34 in vertikaler Richtung in die von dem Greifer 11 gehaltene Küvette 30 abgesenkt. Wie in Ausschnitt C gezeigt, endet die vertikale Bewegung der Pipettiernadel 34 in einer Position, in der die Pipettiernadel 34 keine Wandung der Küvette 30 berührt. Anschließend wird die Pipettiernadel 34 in horizontaler Richtung verfahren, solange bis die Spitze der Pipettiernadel 34 die Innenwand der Küvette 30 berührt. Wie in Ausschnitt D gezeigt, wird erst in dieser Position, also wenn die Pipettiernadelspitze die Gefäßwand berührt, die Reagenzflüssigkeit von der Pipettiervorrichtung in die Küvette 30 abgegeben. Erst nach Abgabe des gesamten zu transferierenden Flüssigkeitsvolumens wird, wie in Ausschnitt E gezeigt, die Pipettiernadel 34 in horizontaler Richtung in eine Position zurückverfahren, in der die Pipettiernadel 34 keine Wandung der Küvette 30 mehr berührt. Zuletzt wird die Pipettiernadel 34 in vertikaler Richtung aus der von dem Greifer 11 gehaltenen Küvette 30 heraus bewegt, wie in Ausschnitt F gezeigt, und die Küvette 30 kann entweder zur Inkubationseinrichtung oder direkt zu einer Messeinheit transportiert werden.

### BEZUGSZEICHENLISTE

- 1: Analysegerät
- 2: Zuführungsschiene
- 3: Pipettiervorrichtung
- 4: Aufnahmeposition
- 5: Inkubationseinrichtung
- 6: Küvettenvorratsbehälter
- 7: Reagenzgefäßvorratsbehälter
- 8: Reagenzgefäß
- 9: Pipettiervorrichtung
- 10: Transferarm
- 11: Greifer
- 12: Bauteil mit geneigter Fläche
- 13: Messeinheit
- 14: Waschstation
- 20: Steuereinheit
- 30: Küvette
- 33: geneigte Fläche
- 34: Pipettiernadel

## Patentansprüche

1. Verfahren zum Transfer eines Flüssigkeitsvolumens in einem Analysegerät (1), das Analysegerät (1) umfassend eine an einem ersten verfahrbaren Transferarm befestigte Pipettiervorrichtung (9) mit einer Pipettiernadel (34) und einen an einem zweiten verfahrbaren Transferarm (10) befestigten Greifer (11) für ein Reaktionsgefäß (30), wobei das Verfahren die folgenden Schritte aufweist:
a) Aufnahme eines Reaktionsgefäßes (30) mit dem Greifer (11) ;
b) Entnahme eines definierten Flüssigkeitsvolumens aus einem Flüssigkeitsbehälter mit der Pipettiervorrichtung (9);
c) Verfahren der Pipettiervorrichtung (9) in eine Position oberhalb des Reaktionsgefäßes (30);
d) Absenken der Pipettiernadel (34) in vertikaler Richtung in das von dem Greifer (11) gehaltene Reaktionsgefäß (30) in eine Position, in der die Pipettiernadel (34) keine Wandung des Reaktionsgefäßes (30) berührt;
e) Verfahren der Pipettiervorrichtung (9) in horizontaler Richtung, so dass die Spitze der Pipettiernadel (34) die Innenwand des Reaktionsgefäßes (30) berührt;
f) Abgabe des definierten Flüssigkeitsvolumens in das Reaktionsgefäß (30);
g) Zurückverfahren der Pipettiervorrichtung (9) in horizontaler Richtung in eine Position, in der die Pipettiernadel (34) keine Wandung des Reaktionsgefäßes (30) berührt; und
h) Anheben der Pipettiernadel (34) in vertikaler Richtung aus dem von dem Greifer (11) gehaltenen Reaktionsgefäß (30) heraus,
**dadurch gekennzeichnet, dass** das Reaktionsgefäß (30) von dem Greifer (11) zumindest während der Durchführung der Verfahrensschritte e) bis g) in einer Schrägstellung gehalten wird, so dass die Längsachse des Reaktionsgefäßes (30) relativ zur Längsachse der Pipettiernadel (34) geneigt ist.

2. Verfahren gemäß Anspruch 1, wobei in der Schrägstellung die Längsachse des Reaktionsgefäßes (30) um einen Winkel von 5° bis 20°, bevorzugt von 9° bis 15° relativ zur Längsachse der Pipettiernadel (34) geneigt ist.

3. Verfahren gemäß einem der vorhergehenden Ansprüche, wobei das Reaktionsgefäß (30) von dem Greifer (11) zumindest während der Durchführung der Verfahrensschritte d) bis h) in der Schrägstellung gehalten wird.

4. Verfahren gemäß einem der vorhergehenden Ansprüche, wobei die Aufnahme des Reaktionsgefäßes (30) mit dem Greifer (11) in Schritt a) aus einer Senkrechtstellung in einer Aufnahmeposition (4) erfolgt und die Schrägstellung des Reaktionsgefäßes (30) dadurch bewirkt wird, dass das Reaktionsgefäß (30) mittels einer Verfahrbewegung des Greifers (11) in horizontaler Richtung gegen eine geneigte Fläche (33) gedrückt wird.

5. Verfahren gemäß einem der vorhergehenden Ansprüche, wobei der Greifer (11) für das Reaktionsgefäß (30) einteilig und elastisch verformbar ausgeführt ist.

6. Verfahren gemäß einem der Ansprüche 1 bis 3, wobei die Aufnahme des Reaktionsgefäßes (30) mit dem Greifer (11) in Schritt a) aus einer Senkrechtstellung in einer Aufnahmeposition (4) erfolgt und die Schrägstellung des Reaktionsgefäßes (30) durch eine Kippbewegung des Greifers (11) bewirkt wird.

7. Verfahren gemäß Anspruch 6, wobei der Greifer (11) für das Reaktionsgefäß (30) ein steuerbares Gelenk umfasst.

8. Automatisches Analysegerät (1) mit mindestens einer an einem ersten verfahrbaren Transferarm befestigten Pipettiervorrichtung (9) mit einer Pipettiernadel (34), einem an einem zweiten verfahrbaren Transferarm (10) befestigten Greifer (11) für ein Reaktionsgefäß (30), einer Vielzahl von Aufnahmepositionen (4) für Reaktionsgefäße (30) und mit einer Steuervorrichtung, die so konfiguriert ist, dass sie ein Verfahren mit den folgenden Schritten steuert:
a) Aufnahme eines Reaktionsgefäßes (30) mit dem Greifer (11) ;
b) Entnahme eines definierten Flüssigkeitsvolumens aus einem Flüssigkeitsbehälter mit der Pipettiervorrichtung (9);
c) Verfahren der Pipettiervorrichtung (9) in eine Position oberhalb des Reaktionsgefäßes (30);
d) Absenken der Pipettiernadel (34) in vertikaler Richtung in das von dem Greifer (11) gehaltene Reaktionsgefäß (30) in eine Position, in der die Pipettiernadel (34) keine Wandung des Reaktionsgefäßes (30) berührt;
e) Verfahren der Pipettiervorrichtung (9) in horizontaler Richtung, so dass die Spitze der Pipettiernadel (34) die Innenwand des Reaktionsgefäßes (30) berührt;
f) Abgabe des definierten Flüssigkeitsvolumens in das Reaktionsgefäß (30);
g) Zurückverfahren der Pipettiervorrichtung (9) in horizontaler Richtung in eine Position, in der die Pipettiernadel (34) keine Wandung des Reaktionsgefäßes (30) berührt; und
h) Anheben der Pipettiernadel (34) in vertikaler Richtung aus dem von dem Greifer (11) gehaltenen Reaktionsgefäß (30) heraus; und
i) Schrägstellen des Reaktionsgefäßes (30), so dass das Reaktionsgefäß (30) von dem Greifer (11) zumindest während der Durchführung der Verfahrensschritte e) bis g) in einer Schrägstellung gehalten wird, so dass die Längsachse des Reaktionsgefäßes (30) relativ zur Längsachse der Pipettiernadel (34) geneigt ist.

9. Automatisches Analysegerät (1) gemäß Anspruch 8, wobei in der Schrägstellung die Längsachse des Reaktionsgefäßes (30) um einen Winkel von 5° bis 20°, bevorzugt von 9° bis 15° relativ zur Längsachse der Pipettiernadel (34) geneigt ist.

10. Automatisches Analysegerät (1) gemäß einem der Ansprüche 8 und 9, ferner umfassend ein Element (12) mit einer gegen die Vertikale geneigten Fläche (33), und bei dem die Steuerung ferner so konfiguriert ist, dass die Schrägstellung des Reaktionsgefäßes (30) dadurch bewirkt wird, dass das Reaktionsgefäß (30) mittels einer Verfahrbewegung des Greifers (11) in horizontaler Richtung gegen die geneigte Fläche (33) des Elements (12) gedrückt wird.

11. Automatisches Analysegerät (1) gemäß Anspruch 10, wobei der Greifer (11) für das Reaktionsgefäß (30) einteilig und elastisch verformbar ausgeführt ist.

12. Automatisches Analysegerät (1) gemäß einem der Ansprüche 8 und 9, bei dem der Greifer (11) für das Reaktionsgefäß (30) ein steuerbares Gelenk umfasst und bei dem die Steuerung ferner so konfiguriert ist, dass die Schrägstellung des Reaktionsgefäßes (30) dadurch bewirkt wird, dass durch eine Bewegung des Gelenks eine Kippbewegung des Greifers (11) bewirkt wird.

## Claims

1. Method for transferring a liquid volume in an analyzer (1), the analyzer (1) comprising a pipetting device (9) mounted on a first shiftable transfer arm and having a pipetting needle (34) and a gripper (11) mounted on a second shiftable transfer arm (10) and intended for a reaction vessel (30), the method comprising the following steps:
a) grabbing a reaction vessel (30) using the gripper (11) ;
b) removing a defined liquid volume from a liquid container using the pipetting device (9);
c) shifting the pipetting device (9) to a position above the reaction vessel (30);
d) lowering the pipetting needle (34) in a vertical direction into the reaction vessel (30) held by the gripper (11), to a position in which the pipetting needle (34) does not touch a wall of the reaction vessel (30);
e) shifting the pipetting device (9) in a horizontal direction such that the tip of the pipetting needle (34) touches the inner wall of the reaction vessel (30) ;
f) dispensing the defined liquid volume into the reaction vessel (30);
g) retracting the pipetting device (9) in a horizontal direction to a position in which the pipetting needle (34) does not touch a wall of the reaction vessel (30); and
h) raising the pipetting needle (34) in a vertical direction out of the reaction vessel (30) held by the gripper (11),
**characterized in that** the reaction vessel (30) is held in an inclined position by the gripper (11) at least during the execution of method steps e) to g), and so the longitudinal axis of the reaction vessel (30) is tilted relative to the longitudinal axis of the pipetting needle (34) .

2. Method according to Claim 1, wherein, in the inclined position, the longitudinal axis of the reaction vessel (30) is tilted by an angle of 5° to 20°, preferably of 9° to 15°, relative to the longitudinal axis of the pipetting needle (34).

3. Method according to either of the preceding claims, wherein the reaction vessel (30) is held in the inclined position by the gripper (11) at least during the execution of method steps d) to h).

4. Method according to any of the preceding claims, wherein the grabbing of the reaction vessel (30) using the gripper (11) in step a) is effected from a perpendicular position in an accommodation position (4) and the inclined position of the reaction vessel (30) is brought about by the reaction vessel (30) being pushed by means of a shifting movement of the gripper (11) in a horizontal direction against a sloped surface (33).

5. Method according to any of the preceding claims, wherein the gripper (11) for the reaction vessel (30) is designed to be a single piece and elastically deformable.

6. Method according to any of Claims 1 to 3, wherein the grabbing of the reaction vessel (30) using the gripper (11) in step a) is effected from a perpendicular position in an accommodation position (4) and the inclined position of the reaction vessel (30) is brought about by a tilting movement of the gripper (11).

7. Method according to Claim 6, wherein the gripper (11) for the reaction vessel (30) comprises a controllable joint.

8. Automated analyzer (1) comprising at least one pipetting device (9) mounted on a first shiftable transfer arm and having a pipetting needle (34), a gripper (11) mounted on a second shiftable transfer arm (10) and intended for a reaction vessel (30), a multiplicity of accommodation positions (4) for reaction vessels (30), and comprising a control device configured such that it controls a method comprising the following steps:
a) grabbing a reaction vessel (30) using the gripper (11) ;
b) removing a defined liquid volume from a liquid container using the pipetting device (9);
c) shifting the pipetting device (9) to a position above the reaction vessel (30);
d) lowering the pipetting needle (34) in a vertical direction into the reaction vessel (30) held by the gripper (11), to a position in which the pipetting needle (34) does not touch a wall of the reaction vessel (30);
e) shifting the pipetting device (9) in a horizontal direction such that the tip of the pipetting needle (34) touches the inner wall of the reaction vessel (30) ;
f) dispensing the defined liquid volume into the reaction vessel (30);
g) retracting the pipetting device (9) in a horizontal direction to a position in which the pipetting needle (34) does not touch a wall of the reaction vessel (30); and
h) raising the pipetting needle (34) in a vertical direction out of the reaction vessel (30) held by the gripper (11); and
i) tilting the reaction vessel (30), and so the reaction vessel (30) is held in an inclined position by the gripper (11) at least during the execution of method steps e) to g), and so the longitudinal axis of the reaction vessel (30) is tilted relative to the longitudinal axis of the pipetting needle (34).

9. Automated analyzer (1) according to Claim 8, wherein, in the inclined position, the longitudinal axis of the reaction vessel (30) is tilted by an angle of 5° to 20°, preferably of 9° to 15°, relative to the longitudinal axis of the pipetting needle (34).

10. Automated analyzer (1) according to either of Claims 8 and 9, further comprising an element (12) having a surface (33) tilted with respect to the vertical, and in which the control system is further configured such that the inclined position of the reaction vessel (30) is brought about by the reaction vessel (30) being pushed by means of a shifting movement of the gripper (11) in a horizontal direction against the sloped surface (33) of the element (12).

11. Automated analyzer (1) according to Claim 10, wherein the gripper (11) for the reaction vessel (30) is designed to be a single piece and elastically deformable.

12. Automated analyzer (1) according to either of Claims 8 and 9, in which the gripper (11) for the reaction vessel (30) comprises a controllable joint and in which the control system is further configured such that the inclined position of the reaction vessel (30) is brought about by a tilting movement of the gripper (11) being brought about by a movement of the joint.

## Revendications

1. Procédé de transfert d'un volume de liquide dans un appareil (1) d'analyse, l'appareil (1) d'analyse comprenant un dispositif (9) de pipetage qui est fixé à un premier bras de transfert déplaçable, qui a une aiguille (34) de pipetage et, fixée à un deuxième bras (10) de transfert déplaçable, une pince (11) pour un récipient (30) de réaction, dans lequel le procédé a les stades suivants :
a) réception d'un récipient (30) de réaction par la pince (11);
b) prélèvement d'un volume défini de liquide d'un récipient de liquide par le dispositif (9) de pipetage;
c) déplacement du dispositif (9) de pipetage pour le mettre dans une position au-dessus du récipient (30) de réaction;
d) abaissement de l'aiguille (34) de pipetage dans la direction verticale dans le récipient (30) de réaction maintenu par la pince (11) dans une position, dans laquelle l'aiguille (34) de pipetage ne touche pas une paroi du récipient (30) de réaction;
e) déplacement du dispositif (9) de pipetage dans une direction horizontale de manière à ce que la pointe de l'aiguille (34) de pipetage touche la paroi intérieure du récipient (30) de réaction;
f) transvasement du volume défini de liquide dans le récipient (30) de réaction;
g) déplacement suivant la direction horizontale du dispositif (9) de pipetage en retour dans une position, dans laquelle l'aiguille (24) de pipetage ne touche pas une paroi du récipient (30) de réaction; et
h) sortie suivant la direction verticale de l'aiguille (34) de pipetage du récipient (30) de réaction maintenu par la pince (11),
**caractérisé en ce que** l'on maintient le récipient (30) de réaction par la pince (11), au moins pendant que l'on effectue les stades e) à g) du procédé, dans une position inclinée de manière à ce que l'axe longitudinal du récipient (30) de réaction soit incliné par rapport à l'axe longitudinal de l'aiguille (34) de pipetage.

2. Procédé suivant la revendication 1, dans lequel, dans la position inclinée, l'axe longitudinal du récipient (30) de réaction est incliné d'un angle de 5° à 20°, de préférence de 9° à 15°, par rapport à l'axe longitudinal de l'aiguille (34) de pipetage.

3. Procédé suivant l'une des revendications précédentes, dans lequel on maintient par la pince (11) le récipient (30) de réaction dans la position inclinée au moins pendant que l'on effectue les stades d) à h) du procédé.

4. Procédé suivant l'une des revendications précédentes, dans lequel la réception du récipient (30) de réaction par la pince (11) au stade a) s'effectue d'une position verticale à une position (4) de réception et on obtient la position inclinée de récipient (30) de réaction par le fait que l'on pousse le récipient (30) de réaction au moyen d'un mouvement de déplacement de la pince (11) dans la direction horizontale contre une surface (33) inclinée.

5. Procédé suivant l'une des revendications précédentes, dans lequel la pince (11) pour le récipient (30) de réaction est d'une seule pièce et est déformable élastiquement.

6. Procédé suivant l'une des revendications 1 à 3, dans lequel la réception du récipient (30) de réaction par la pince (11) au stade a) s'effectue d'une position verticale à une position (4) de réception et on obtient la position inclinée du récipient (30) de réaction par un mouvement de basculement de la pince (11).

7. Procédé suivant la revendication 6, dans lequel la pince (11) pour le récipient (30) de réaction comprend une articulation pouvant être commandée.

8. Appareil (1) d'analyse automatique comprenant au moins un dispositif (9) de pipetage, qui est fixé à un premier bras de transfert déplaçable, qui a une aiguille (34) de pipetage et, fixée à un deuxième bras (10) de transfert déplaçable, une pince (11) pour un récipient (30) de réaction, une pluralité de positions (4) de réception de récipients (30) de réaction et un dispositif de commande, qui est configuré de manière à commander un procédé ayant les stades suivants :
a) réception d'un récipient (30) de réaction par la pince (11);
b) prélèvement d'un volume défini de liquide d'un récipient de liquide par le dispositif (9) de pipetage;
c) déplacement du dispositif (9) de pipetage pour le mettre dans une position au-dessus du récipient (30) de réaction ;
d) abaissement de l'aiguille (34) de pipetage dans la direction verticale dans le récipient (30) de réaction maintenu par la pince (11) dans une position, dans laquelle l'aiguille (34) de pipetage ne touche pas une paroi du récipient (30) de réaction ;
e) déplacement du dispositif (9) de pipetage dans une direction horizontale de manière à ce que la pointe de l'aiguille (34) de pipetage touche la paroi intérieure du récipient (30) de réaction ;
f) transvasement du volume défini de liquide dans le récipient (30) de réaction ;
g) déplacement suivant la direction horizontale du dispositif (9) de pipetage en retour dans une position, dans laquelle l'aiguille (24) de pipetage ne touche pas une paroi du récipient (30) de réaction ; et
h) sortie suivant la direction verticale de l'aiguille (34) de pipetage du récipient (30) de réaction maintenu par la pince (11) ; et
i) mise en position inclinée du récipient (30) de réaction de manière à ce que le récipient (30) de réaction soit maintenu par la pince (11), au moins pendant que l'on effectue les stades de e) à g) du procédé, dans une position inclinée de manière à ce que l'axe longitudinal du récipient (30) de réaction soit incliné par rapport à l'axe longitudinal de l'aiguille (34) de pipetage.

9. Appareil (1) d'analyse automatique suivant la revendication 8, dans lequel, dans la position inclinée, l'axe longitudinal du récipient (30) de réaction est incliné d'un angle de 5° à 20°, de préférence de 9° à 15°, par rapport à l'axe longitudinal de l'aiguille (34) de pipetage.

10. Appareil (1) d'analyse automatique suivant l'une des revendications 8 et 9, comprenant en outre un élément (12) ayant une surface (33) inclinée par rapport à la verticale et dans lequel la commande est configurée en outre de manière à obtenir la position inclinée du récipient (30) de réaction par le fait que le récipient (30) de réaction est repoussé suivant la direction horizontale contre la surface (33) inclinée de l'élément (12) au moyen d'un mouvement de déplacement de la pince (11).

11. Appareil (1) d'analyse automatique suivant la revendication 10, dans lequel la pince (11) pour le récipient (30) de réaction est d'une seule pièce et est déformable élastiquement.

12. Appareil (1) d'analyse automatique suivant l'une des revendications 8 et 9, dans lequel la pince (11) pour le récipient (30) de réaction comprend une articulation pouvant être commandée et dans lequel la commande est configurée en outre de manière à obtenir la position inclinée du récipient (30) de réaction par le fait qu'un mouvement de basculement de la pince (11) est obtenu par un mouvement de l'articulation.
